# EUROPÄISCHE PATENTSCHRIFT

(11) **EP 0 989 269 B1**
(45) Veröffentlichungstag und Bekanntmachung des Hinweises auf die Patenterteilung: **14.03.2001**
(21) Anmeldenummer: 98118282.7
(22) Anmeldetag: 26.09.1998
(51) Int. Cl.: E05B 65/20, E05B 47/00, F03G 7/00

(54) **Notentriegelung fuer elektrisch/mechanisch betätigbare Verriegelungseinrichtungen, insbesondere in Kraftfahreugen**
Emergency unlocking device for electrically/mechanically actuated lock devices, in particular for vehicles
Dispositif de déverrouillage de secours pour une serrure actionnée électriquement/manuellement, notamment pour véhicules

(43) Veröffentlichungstag der Anmeldung: 29.03.2000
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Loebach, Werner, 53783 Eitorf (DE)
(74) Vertreter: Messulam, Alec Moses

(56) Entgegenhaltungen:
- EP-A- 0 515 984
- DE-A- 19 545 722
- DE-A- 19 547 727
- DE-A- 19 617 084
- US-A- 3 664 698
- US-A- 4 385 494

## Beschreibung

Die Erfindung bezieht sich auf eine Notentriegelung für elektrisch/mechanisch betätigbare Verriegelungseinrichtungen, insbesondere in Kraftfahrzeugen, der im Oberbegriff des Patentanspruches 1 erläuterten Art.

Aus der DE 36 27 540 C1 ist eine elektrische Zentralverriegelungsvorrichtung für Kraftfahrzeugtüren bekannt, bei der ein elektrischer Betätigungsmotor bei Ausfall der Stromversorgung so geschaltet wird, daß er durch Betätigung über den Schlüssel als Notstrom-Dynamo-Maschine wirkt, die den Strom für die elektromotorische Entriegelung bereitstellt.

Diese bekannte Notentriegelung weist den Nachteil auf, daß hierfür die Betätigung des Schlüssels im Schloß erforderlich ist, was nachfolgend einem schwereren Fahrzeugunfall, bei dem ein Stromausfall auftritt, nur von außenstehenden Helfern zu bewerkstelligen ist und ein passender Schlüssel vorhanden sein rnuß. Außerdem kann durch eine Beschädigung im Bereich des Schlosses u.U. eine Betätigung nicht mehr möglich sein.

Aus der DE 195 47 727 A1 ist eine Einrichtung zum Entriegeln von Türen, insbesondere von Kraftfahrzeugen bekannt, bei der bei einem Stromausfall eine stromunabhängige Betätigungseinrichtung in Form eines Speichers, wie z.B. eines Druckluftspeichers oder eines pyrotechnischen Gasgenerators auf die mechanisch betätigbare Verriegelungseinrichtung einwirkt.

Diese bekannte Notentriegelung weist den Nachteil auf, daß bei einem Stromausfall ohne besondere Unfallfolgen ein Speicher entleert bzw. ein pyrotechnischer Gasgenerator gezündet werden muß, um eine Entriegelung der Verriegelungseinrichtung zu bewerkstelligen, wodurch nachfolgend ein Aufladen des Speichers bzw. ein Ersatz der pyrotechnischen Einrichtung erforderlich wird.

Die Aufgabe der Erfindung ist es, eine Notentriegelung für elektrisch/mechanisch betätigbare Verriegelungseinrichtungen, insbesondere in Kraftfahrzeugen der im Oberbegriff des Patentanspruches erläuterten Art zu schaffen, die z.B. nur bei Stromausfall eine komfortable Notentriegelung über die elektrisch betätigbare Verriegelungseinrichtung ermöglicht und bei schwerer Unfallbeeinträchtigung der Verriegelungseinrichtung, z.B. durch Kurzschluß und dergleichen, darüber hinaus eine selbsttätige Betätigung der mechanisch betätigbaren Verriegelungseinrichtung einleitet.

Gemäß der Erfindung wird diese Aufgabe gelöst, indem eine Notentriegelung für elektrisch/mechanisch betätigbare Verriegelungseinrichtungen, insbesondere in Kraftfahrzeugen, der im Oberbegriff des Patentanspruches 1 erläuterten Art, die im Kennzeichenteil des Patentanspruches 1 aufgezeigten Merkmale angewendet werden.

Die Erfindung wird anhand eines schematischen Ausführungsbeispieles näher erläutert. Es zeigt:
Die Fig. eine schematische Anordnung der elektrisch/mechanisch betätigbaren Verriegelungseinrichtung mit der erfindungsgemäßen Notentriegelung.

In der Fig. ist eine elektrisch/mechanisch betätigbare Verriegelungseinrichtung für ein Kraftfahrzeug in schematischer Anordnung gezeigt. Eine mechanische Verriegelungseinrichtung 1 in Form z.B. eines Kraftfahrzeug-Drehfallen- oder Zapfenschlosses weist einen Entriegelungshebel 2 auf, der bei einem mit einer elektrischen Türentriegelung ausgestatteten Kraftfahrzeug über eine elektromotorische Betätigungseinheit 3 betätigbar ist. Die elektromotorische Betätigungseinrichtung 3 ist hierbei über Stromleitungen 6 und 7 an eine entsprechende Steuereinheit 5 angeschlossen, dessen Schaltung auch die Kriterien für die Aufschaltung der Notstromversorgung/Notentriegelung vorgibt.

Gemäß der Erfindung wird nunmehr benachbart dem Entriegelungshebel 2 der mechanischen Verriegelungseinrichtung 1 ein an sich bekannter elektrochemischer Aktuator 8 angeordnet, der aus einem nach außen abgedichteten Gehäuse besteht, das durch seinen inneren Gasdruck in seiner Ausgangslage gehalten wird. Der elektrochemische Aktuator 8 wird über Leitungen 11 und 12 von der Steuereinheit 5 mit einer Ruhespannung versorgt unter der er sich durch die Volumenausdehnung seines Arbeitsgases in seine ausgedehnte Lage bewegt.

Ein mit dem Gehäuse des elektrochemischen Aktuators 8 über eine Montierung 9 verbundenes Hebelgestänge 13 hat in dieser Lage keinen Einfluß auf den Entriegelungshebel 2 der mechanischen Verriegelungseinrichtung 1.

Fällt infolge eines Stromausfalles die Ruhespannung am elektrochemischen Aktuator 8 fort, so beginnt sich das Gehäuse des elektrochemischen Aktuators 8 unter Umkehrung des, bei der Aufladung wirksamen, chemischen Vorganges zusammenzuziehen, wenn über die Leitungen 11 und 12 ein Stromkreis für die elektromotorische Betätigungseinrichtung 3 durch Betätigung der Entriegelungsfunktion geschlossen wird.

Bei Stromausfall kann somit die mechanische Verriegelungseinrichtung über die elektromotorische Betätigungseinrichtung entriegelt werden.

Ist infolge eines Unfalles nicht nur ein Stromausfall aufgetreten, sondern unter Umständen auch eine Leitungstrennung, eine mechanische Blockierung der elektromotorischen Betätigungseinrichtung 3 oder ein Kurzschluß erfolgt, so wird sich der elektrochemische Aktuator 8 völlig entladen, ohne daß hierdurch eine elektromotorische Betätigung möglich ist. Die über die Feder 10 unterstützte Verkürzung des Gehäuses des elektrochemischen Aktuators 8 sorgt jedoch hierbei über das Verbindungsgestänge 13, daß nunmehr der Aktuator 8 eine mechanische Wirkung auf den Entriegelungshebel 2 der mechanischen Verriegelungseinrichtung 1 ausübt, also eine selbsttätige Notentriegelung in der Weise, daß z.B. das Öffnen einer Fahrzeugtür sowohl von außen als auch von innen her ohne weiteres möglich ist.

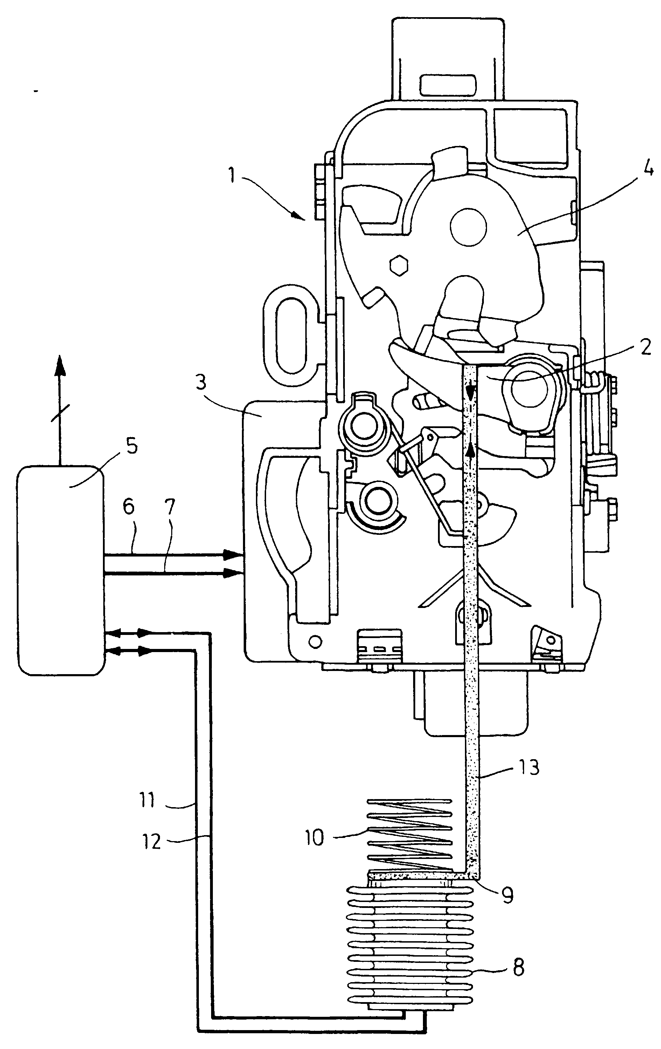

## Patentansprüche

1. Notentriegelung für elektrisch/mechanisch betätigbare Verriegelungseinrichtungen, insbesondere in Kraftfahrzeugen, mit einer über eine elektromotorische Betätigungseinrichtung (3) betätigbare mechanische Verriegelungseinrichtung (1), an der ggf. eine stromunabhängige mechanisch Betätigungseinrichtung angreift,
**dadurch gekennzeichnet**, daß
an der mechanischen Verriegelungseinrichtung (1) mit einem Entriegelungshebel (2) ein elektrochemischer Aktuator (8) bekannter Bauart angeordnet wird, der im Falle eines Stromausfalles durch die Umkehrung eines chemischen Vorganges Strom für die elektromotorische Betätigungsvorrichtung (3) zur Verfügung stellt und im Falle einer Blockierung oder eines Kurzschlusses der elektromotorischen Betätigungsvorrichtung (3) durch die Längenänderung seines Gehäuses über ein Verbindungsgestänge (13) derart mechanisch auf den Entriegelungshebel (2) der mechanischen Verriegelungseinrichtung (1) einwirkt, daß diese in Entriegelungslage verstellt wird.

## Claims

1. Emergency unlocking means for electrically/ mechanically actuatable locking means, in particular in motor vehicles, having a mechanical locking means (1) actuatable by means of an electric motor-driven actuating means (3), which mechanical locking means (1) is optionally acted upon by a mechanical, current-independent actuating means,
characterised in that
an electrochemical actuator (8) of known construction is arranged on the mechanical locking means (1) having an unlocking lever (2), which electrochemical actuator (8) provides current for the electric motor-driven actuating device (3) in the event of a power failure by the reversal of a chemical process and acts mechanically via a connecting linkage (13) on the unlocking lever (2) of the mechanical locking means (1) in the event of a blockage or short-circuit of the electric motor-driven actuating device (3) by varying the length of the housing thereof, in such a way that said mechanical locking means (1) is moved into the unlocked position.

## Revendications

1. Déverrouillage de secours pour des dispositifs de verrouillage à actionnement électromécanique, notamment dans des véhicules automobiles, avec un dispositif de verrouillage mécanique (1), qui peut être actionné au moyen d'un dispositif d'actionnement (3) à moteur électrique et sur lequel agit éventuellement un dispositif d'actionnement mécanique indépendant du courant électrique,
**caractérisé** en ce qu'un actionneur électrochimique (8) de type connu est disposé sur le dispositif de verrouillage mécanique (1) pourvu d'un levier de déverrouillage (2), actionneur qui, en cas de panne de courant, par l'inversion d'un processus chimique, met à disposition du courant électrique pour le dispositif d'actionnement (3) à moteur électrique et qui, en cas de blocage ou de court-circuitage du dispositif d'actionnement (3) à moteur électrique, par la modification de la position de son boîtier, agit mécaniquement, par l'intermédiaire d'une tringlerie de liaison (13), sur le levier de déverrouillage (2) du dispositif de verrouillage mécanique (1) de telle sorte que ce dispositif est réglé en position de déverrouillage.
